# EUROPEAN PATENT SPECIFICATION

(11) **EP 2 030 788 B1**
(45) Date of publication and mention of the grant of the patent: **07.03.2012**
(21) Application number: 08163585.6
(22) Date of filing: 03.09.2008
(51) Int. Cl.: B41J 2/045, B41J 2/21

(54) **Inkjet printing apparatus and processing method therefor**
Tintenstrahldruckvorrichtung und Verarbeitungsverfahren dafür
Appareil d'impression à jet d'encre et son procédé de traitement

(30) Priority: 03.09.2007 JP 2007228282
(43) Date of publication of application: 04.03.2009
(73) Proprietor: Canon Kabushiki Kaisha, Tokyo 146-8501 (JP)
(72) Inventor: Uemura, Hiroshi, Ohta-ku Tokyo (JP); Nakanishi, Hideki, Ohta-ku Tokyo (JP)
(74) Representative: Garner, Jonathan Charles Stapleton

(56) References cited:
- EP-A- 1 329 316
- EP-A- 1 356 940
- JP-A- 2002 127 397
- JP-A- 2006 159 551

## Description

### BACKGROUND OF THE INVENTION

### Field of the Invention

The present invention relates to an inkjet printing apparatus which prints by receiving multi-valued image data and rasterizing it into binary data based on the dot layout pattern, and a processing method therefor.

### Description of the Related Art

Recent inkjet printing apparatuses print high-quality images by discharging ink droplets of different dot sizes using inks of different densities and inks of different colors. Along with this, the number of printing element arrays (nozzle arrays) in which a plurality of printing elements are arrayed in the print head increases.

The sequence of a printing operation in a printing apparatus will be described briefly. Image data is transferred from a host apparatus to the printing apparatus as multi-valued data for the respective colors of inks used to print, and stored in the memory of the printing apparatus. The printing apparatus reads out, from the memory, the multi-valued data transferred from the host apparatus, and rasterizes it into binary data based on the dot layout pattern. The printing apparatus transfers, to the print head, print data generated by performing a predetermined process for the rasterized binary data. The print head prints in accordance with the print data.

The binary data obtained by rasterizing the multi-valued data input from the host apparatus is stored in a print buffer for each nozzle array. In general, printing is done by reading out binary data from the print buffer for each nozzle array. However, if the number of nozzle arrays increases, the necessary capacity of the print buffer also increases, and the memory access count rises in generating print data for each nozzle array. This sometimes decreases the printing speed.

A printing apparatus disclosed in Japanese Patent Laid-Open No. 2003-211739 stores multi-valued data input from a host apparatus in a print buffer, and temporarily holds, in a FIFO type dedicated memory (dedicated FIFO memory), the multi-valued data stored in the print buffer. When generating print data, the dedicated FIFO memory is accessed to decrease the count of access to the print buffer and increase the throughput.

This printing apparatus adopts a high-speed SRAM as the dedicated FIFO memory, and stores index data (multi-valued data) from the print buffer in the dedicated FIFO memory. The dedicated FIFO memory has an index data storage area for each color. Every time data of one column is generated, an index expansion circuit executes an index expansion process by accessing the dedicated FIFO memory, and stores the expanded data in the register.

The prior art can decrease the count of access to the print buffer. However, every time data of one column is generated, the dedicated FIFO memory must be accessed for each nozzle array. As the number of nozzle arrays increases, the count of access to the dedicated FIFO memory rises, decreasing the throughput.

The dedicated FIFO memory is arranged for each color. If the number of ink colors increases, the number of dedicated FIFO memories must also be increased.

### SUMMARY OF THE INVENTION

The present invention enables realization of a printing apparatus which increases the throughput by decreasing access to a print buffer without separately arranging a dedicated memory, and a processing method therefor.

According to a first aspect of the present invention there is provided a printing apparatus according to claim 1.

According to a second aspect of the present invention there is provided a processing method according to claim 6.

Further features of the present invention will be apparent from the following description of exemplary embodiments with reference to the attached drawings.

### BRIEF DESCRIPTION OF THE DRAWINGS

Fig. 1 is a block diagram showing the circuit arrangement of a printing apparatus according to an embodiment;

Fig. 2 is a block diagram showing the whole arrangement of the printing apparatus according to the embodiment;

Fig. 3 is a view showing the structure of a print head mounted in the printing apparatus according to the embodiment;

Fig. 4 is a view showing the nozzle arrangement of the print head in Fig. 3;

Figs. 5A and 5B are views showing examples of the dot layout for multi-valued data used in the printing apparatus according to the embodiment;

Figs. 6A and 6B are views showing examples of the structure of a print buffer in the printing apparatus according to the embodiment;

Fig. 7 is a view showing the plane arrangement of the print buffer according to the embodiment;

Figs. 8A and 8B are views showing a print data generation order according to the embodiment;

Figs. 9A and 9B are timing charts of print data generation control according to the embodiment;

Fig. 10 is a schematic perspective view showing the outer appearance of the structure of an inkjet printing apparatus according to the embodiment;

Fig. 11 is a flowchart showing an example of a printing method according to the embodiment; and

Figs. 12A and 12B are views for explaining a memory area set in a data conversion circuit according to the embodiment.

### DESCRIPTION OF THE EMBODIMENT

A preferred embodiment of the present invention will now be described in detail with reference to the drawings. It should be noted that the relative arrangement of the components, the numerical expressions and numerical values set forth in the embodiment do not limit the scope of the present invention unless it is specifically stated otherwise.

In this specification, the term "print" (to be also referred to as "printing" hereinafter) not only includes the formation of significant information such as characters and graphics, but also broadly includes the formation of images, figures, patterns, and the like on a print medium, or the processing of the medium, regardless of whether they are significant or insignificant and whether they are so visualized as to be visually perceivable by humans.

Also, the term "print medium" not only includes paper used in general printing apparatuses, but also broadly includes materials capable of accepting ink, such as cloth, a plastic film, a metal plate, glass, ceramics, wood, and leather.

Further, the term "ink" should be extensively interpreted similar to the definition of "print" described above. That is, "ink" includes a liquid which, when applied onto a print medium, can form images, figures, patterns, and the like, can process the print medium, and can process ink. Ink processing includes solidification or insolubilization of a coloring agent contained in ink applied to the print medium.

Unless otherwise specified, the term "nozzle" generally means a set of a discharge orifice, a liquid channel connected to the discharge orifice, and an element to generate energy utilized for ink discharge.

In the following description, a printing apparatus using an inkjet printing method will be exemplified, but the present invention is not limited to this.

### [Embodiment]

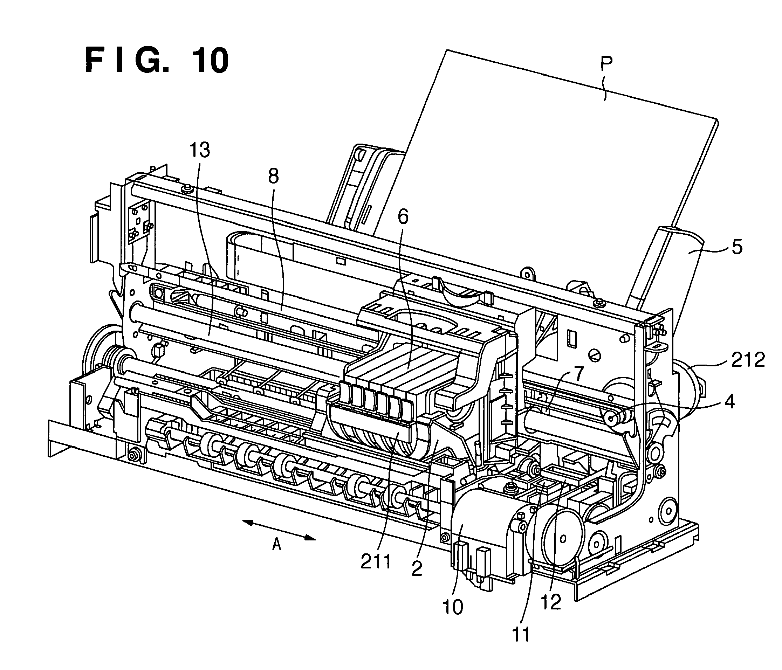

Fig. 10 is a schematic perspective view showing the outer appearance of the structure of an inkjet printing apparatus according to an embodiment.

As shown in Fig. 10, the inkjet printing apparatus (to be referred to as a printing apparatus hereinafter) mounts a print head 211 which prints by discharging ink according to the inkjet method. A transfer mechanism 4 transfers a driving force generated by a carriage motor 212 to a carriage 2 supporting the print head 211 to reciprocate the carriage 2 in directions indicated by an arrow A as the main scanning direction (reciprocal scanning). Along with this reciprocal scanning, a print medium P such as print paper is fed via a paper feed mechanism 5 and conveyed to a print position. At the print position, the print head 211 prints by discharging ink to the print medium P.

The carriage 2 of the printing apparatus supports not only the print head 211, but also an ink tank 6 which contains ink to be supplied to the print head 211. The ink tank 6 is detachable from the carriage 2.

The printing apparatus shown in Fig. 10 can print in color. For this purpose, the carriage 2 supports six ink tanks which respectively contain magenta (M), cyan (C), yellow (Y), black (K), red (R), and green (G) inks. The six ink tanks are independently detachable.

The carriage 2 and print head 211 can achieve and maintain a predetermined electrical connection by properly bringing their contact surfaces into contact with each other. The print head 211 selectively discharges ink from a plurality of discharge orifices and prints by applying energy in accordance with a printing signal. In particular, the print head 211 according to the embodiment adopts an inkjet method of discharging ink by using heat energy, and comprises an electrothermal transducer for generating heat energy. Electric energy applied to the electrothermal transducer is converted into heat energy. Ink is discharged from discharge orifices by using a change in pressure upon growth and contraction of bubbles by film boiling generated by applying the heat energy to ink. The electrothermal transducer is arranged in correspondence with each discharge orifice, and ink is discharged from a corresponding discharge orifice by applying a pulse voltage to a corresponding electrothermal transducer in accordance with a printing signal.

As shown in Fig. 10, the carriage 2 is coupled to part of a driving belt 7 of the transfer mechanism 4 which transfers the driving force of the carriage motor 212. The carriage 2 is slidably guided and supported along a guide shaft 13 in the directions indicated by the arrow A. The carriage 2 reciprocates along the guide shaft 13 by normal rotation and reverse rotation of the carriage motor 212. A scale 8 representing the position of the carriage 2 is arranged along the main scanning direction (directions indicated by the arrow A) of the carriage 2.

The printing apparatus has a platen (not shown) facing the discharge orifice surface of the print head 211 having discharge orifices (not shown). The carriage 2 supporting the print head 211 reciprocates by the driving force of the carriage motor 212. At the same time, the print head 211 receives a printing signal to discharge ink and print by the entire width of the print medium P conveyed onto the platen.

In the printing apparatus, a recovery apparatus 10 for recovering the print head 211 from a discharge failure is arranged at a position outside the reciprocation range (outside the printing area) for the printing operation of the carriage 2 supporting the print head 211.

The recovery apparatus 10 comprises a capping mechanism 11 which caps the discharge orifice surface of the print head 211, and a wiping mechanism 12 which cleans the discharge orifice surface of the print head 211. The recovery apparatus 10 performs a discharge recovery operation. For example, the recovery apparatus 10 forcibly discharges ink from discharge orifices by a suction means (suction pump or the like) in the recovery apparatus in synchronism with capping of the discharge orifice surface by the capping mechanism 11. Accordingly, the recovery apparatus 10 removes ink with high viscosity or bubbles from the ink channel of the print head 211.

In a non-printing operation or the like, the capping mechanism 11 caps the discharge orifice surface of the print head 211 to protect the print head 211 and prevent evaporation and drying of ink. The wiping mechanism 12 is arranged near the capping mechanism 11, and wipes ink droplets attached to the discharge orifice surface of the print head 211.

The printing apparatus can execute preliminary discharge by discharging ink irrelevant to printing to the capping mechanism 11.

The ink discharge state of the print head 211 can be kept normal by the suction operation and preliminary discharge operation using the capping mechanism 11, and the wiping operation using the wiping mechanism 12.

Fig. 10 shows a structure in which the ink tank 6 and print head 211 are divided, but the embodiment may also adopt a head cartridge which integrates the ink tank and print head.

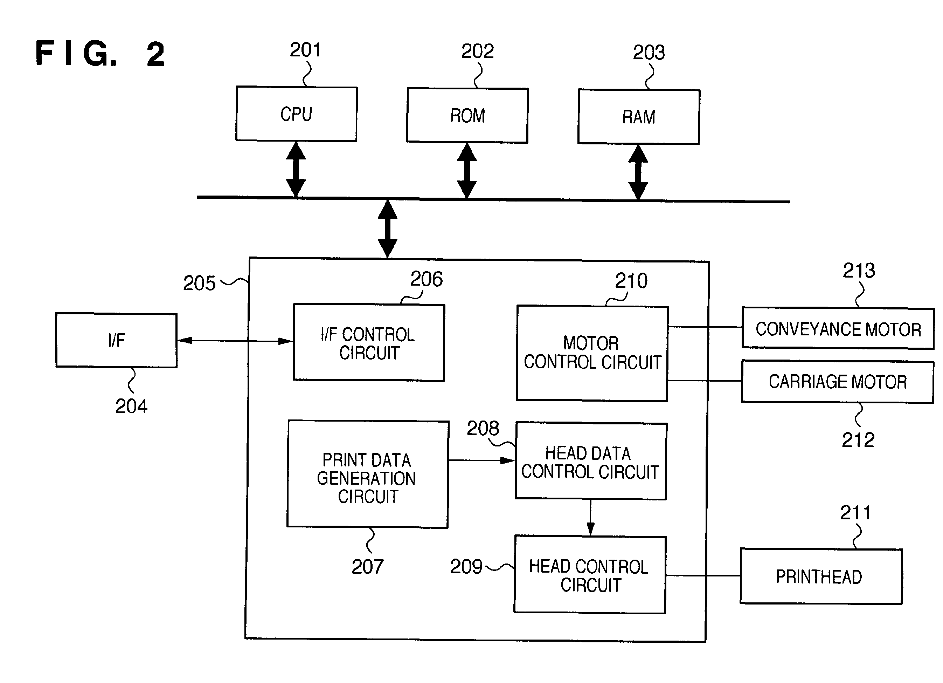

Fig. 2 is a block diagram showing the whole arrangement of the printing apparatus according to the embodiment. In Fig. 2, reference numeral 201 denotes a CPU; and 202, a ROM which stores programs to be executed by the CPU 201, other table data, and the like. A RAM 203 is used as areas such as a reception buffer for storing data received from a host apparatus (not shown) via an interface (I/F) 204, a print buffer for storing data to generate print data, and a mask buffer for storing mask data. The print buffer holds multi-valued data or bitmap data (binary data). An ASIC type printing apparatus control unit 205 includes an interface control circuit 206 which transmits/receives data to/from an external host apparatus via the interface 204, and a print data generation circuit 207 which generates print data from data received from a host apparatus. The ASIC 205 also includes a head data control circuit 208 which temporarily holds print data generated by the print data generation circuit 207 and rearranges the data in the order of transfer to the print head 211, and a head control circuit 209 which controls data transfer to the print head 211 and ink discharge. Further, the ASIC 205 includes a motor control circuit 210 which controls driving of the carriage motor 212 for scanning the carriage supporting the print head 211, and a conveyance motor 213 for feeding and delivering a print medium.

The printing operation in the printing apparatus having this control arrangement will be explained. Upon receiving image data from a host apparatus via the interface 204, the interface control circuit 206 in the ASIC 205 temporarily stores the received data in the reception buffer allocated in the RAM 203. The received data stored in the reception buffer undergoes command analysis, and then data for generating print data is stored in the print buffer allocated in the RAM 203. The data stored in the print buffer may also be bitmap data or multi-valued data. After a necessary amount of data is stored in the print buffer, the print data generation circuit 207 reads out data from the print buffer and mask buffer at predetermined timings, respectively. The print data generation circuit 207 generates print data, and transmits it to the subsequent head data control circuit 208. The head data control circuit 208 temporarily holds the print data, and rearranges them in the print head driving order. The head data control circuit 208 has a buffer for holding data of 16 columns corresponding to nozzle arrays. The head control circuit 209 receives print data of one column for each nozzle from the head data control circuit 208, and transfers it to the print head 211. In correspondence with scanning of the print head 211, the head control circuit 209 supplies a driving pulse to the print head 211 based on the print data. The print head 211 discharges ink from each nozzle, forming an image. The carriage motor 212 and conveyance motor 213 are driven under the control of the motor control circuit 210, scanning the carriage supporting the print head 211 and conveying a print medium. The head control circuit 209 controls the nozzles of the print head by so-called time-divisional driving. For example, one nozzle array has 12 groups each of 32 adjacent nozzles, and it is controlled to simultaneously drive nozzles each included in a corresponding group. At the next timing, other nozzles each included in a corresponding group are driven. By sequentially driving nozzles in this way, all the nozzles are driven.

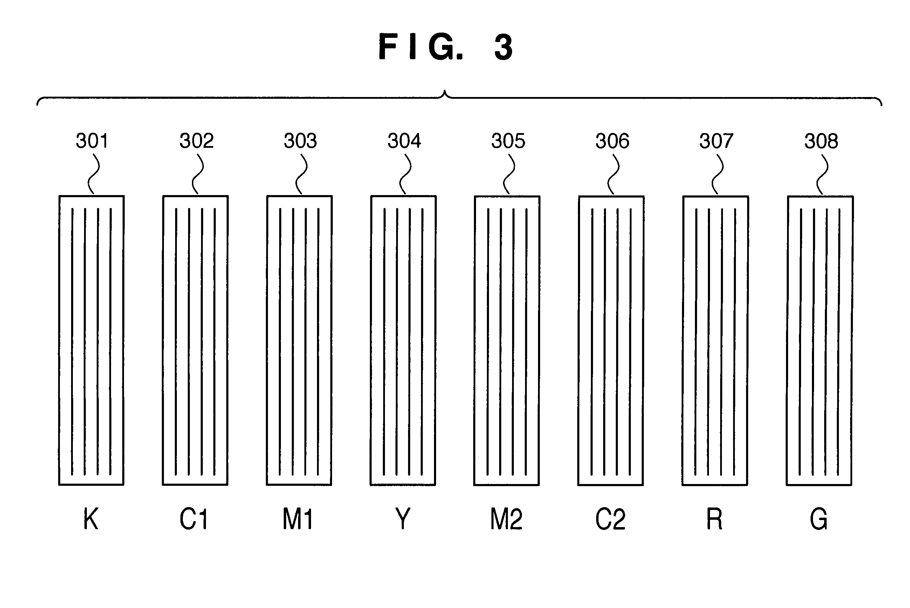

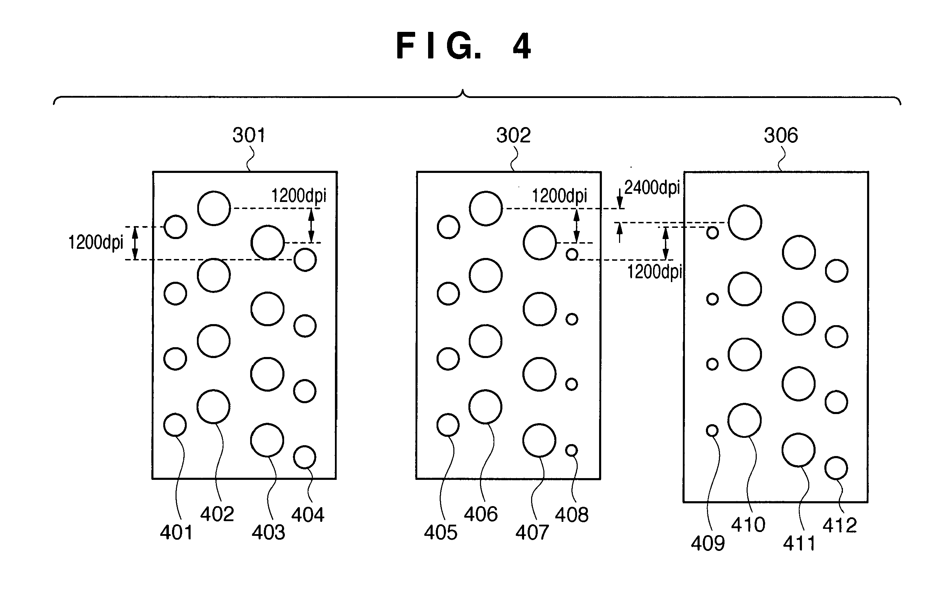

The structure of the print head mounted in the printing apparatus according to the embodiment will be described with reference to Figs. 3 and 4. The printing apparatus according to the embodiment uses six inks: black, cyan, magenta, yellow, red, and green color inks. Reference numeral 301 denotes a black ink head chip; 302 and 306, cyan ink head chips; 303 and 305, magenta ink head chips; 304, a yellow ink head chip; 307, a red ink head chip; and 308, a green ink head chip. Each head chip includes four parallel nozzle arrays. Hence, the print head has 32 nozzle arrays.

Fig. 4 is a view showing a nozzle arrangement. Basically, an image is formed by arranging dots using two, paired, arrays. The arrays are formed of evenly spaced nozzles arranged such that nozzles of the arrays are out of line with each other forming "odd and even" arrays. Each nozzle array has 384 nozzles at intervals of 600 dpi (dots/inch). The nozzle arrays are arranged such that even- and odd-side nozzles having the same nozzle diameter on each head chip are arranged at intervals of 1,200 dpi. When the nozzles of a nozzle array 406 on the cyan ink head chip 302 are defined as a reference, these nozzles are arranged at intervals of 2,400 dpi from those of a nozzle array 410 on the cyan ink head chip 306. This also applies to the intervals between the nozzles of a nozzle array 407 on the cyan ink head chip 302 and those of a nozzle array 411 on the cyan ink head chip 306. Further, the nozzle arrays are arranged such that nozzles for discharging middle sized dots and small sized dots are arranged at intervals of 1,200 dpi.

The head chips for black, yellow, red, and green inks have the same structure. The black ink head chip 301 will be exemplified. The head chip 301 has four nozzles. That is, the head chip 301 has two nozzle arrays for large dots, and two nozzle arrays for middle dots. Reference numeral 402 denotes an even-side nozzle array for discharging large dots of ink; and 403, an odd-side nozzle array. Reference numeral 401 denotes an even-side nozzle array for discharging middle dots of ink; and 404, an odd-side nozzle array.

The cyan ink head chip 302 and magenta ink head chip 303 have the same arrangement, whereas the cyan ink head chip 306 and magenta ink head chip 305 have the same arrangement. The cyan ink head chips 302 and 306 will be exemplified. The nozzle arrays 406 and 407 are paired. The nozzle array 406 is an even-side nozzle array for discharging large dots of ink, and the nozzle array 407 is an odd-side nozzle array. The nozzle arrays 410 and 411 are paired. The nozzle array 410 is an even-side nozzle array for discharging large dots of ink, and the nozzle array 411 is an odd-side nozzle array. Reference numeral 405 denotes an even-side nozzle array for discharging middle dots of ink; and 412, an odd-side nozzle array. Reference numeral 408 denotes an odd-side nozzle array for discharging small dots of ink; and 409, an even-side nozzle array for discharging small dots of ink.

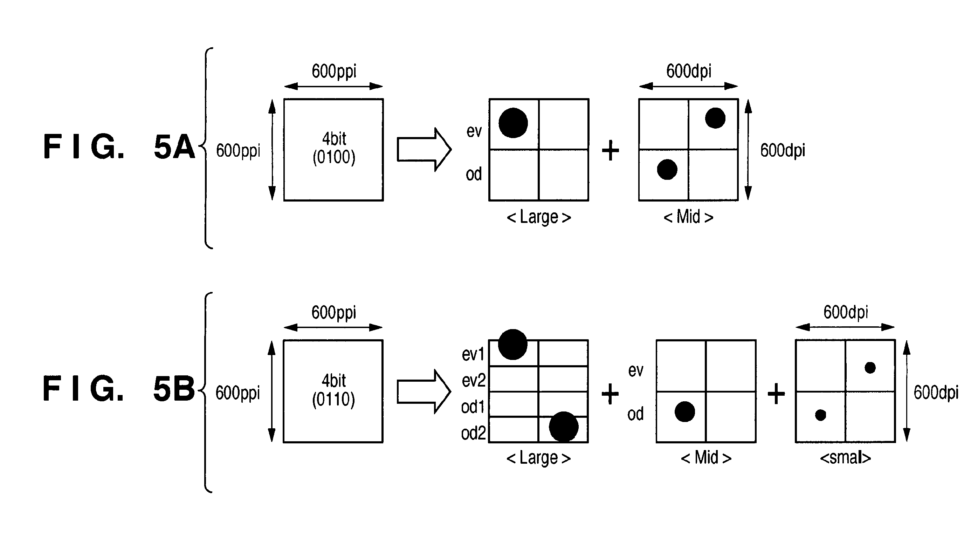

Figs. 5A and 5B show examples of the dot layout when 4-bit multi-valued data (600ppi-4bit multi-valued data) for one pixel is binarized at a resolution of 600 x 600 ppi (pixels/inch). The dot layout in Fig. 5A is applied when laying out dots using black, yellow, red, and green inks. Data for large and middle dots are generated each for four dots from 600ppi-4bit multi-valued data. The resolution of this dot data is 1,200 dpi. The four dots are dots from an even-side nozzle array for discharging large dots of ink, an odd-side nozzle array for discharging large dots of ink, an even-side nozzle array for discharging middle dots of ink, and an odd-side nozzle array for discharging middle dots of ink.

The dot layout in Fig. 5B is applied when laying out dots using cyan and magenta inks. Four nozzle arrays (two pairs of nozzle arrays) for discharging large dots of ink are arranged for cyan and magenta. For example, for cyan, each of the head chips 302 and 306 has two nozzle arrays for discharging large dots of ink. As data for large dots, data of eight dots at 1,200 dpi are generated from 600ppi-4bit multi-valued data. As each of data for middle dots and that for small dots, data of four dots at 1,200 dpi are generated. The large-dot nozzle array of the head chip 302 and that of the head chip 306 are physically apart from each other in the scanning direction. When transferring data from the print data generation circuit 207 to the head data control circuit 208, it is controlled to select four dots in correspondence with a nozzle array (head chip) for use out of generated 8-dot binary data. Multi-valued data are rasterized into binary data in accordance with the dot layout pattern which defines the layout of ink dots in the nozzle array direction and a direction perpendicular to it, as represented by the examples of the dot layout in Figs. 5A and 5B.

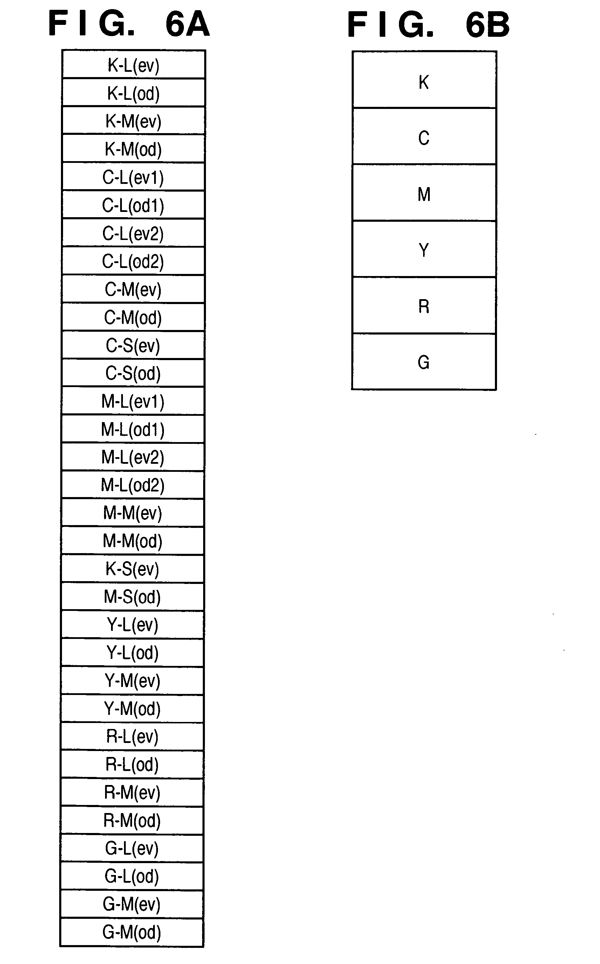

Figs. 6A and 6B are views showing the structure of the print buffer.

Fig. 6A shows the structure of a print buffer which stores multi-valued data input to the printing apparatus as bitmap data for each nozzle array by referring to the dot layout pattern as shown in Figs. 5A and 5B. Since a print buffer having this structure stores data for each nozzle array, print buffers are required for partitions corresponding to 32 arrays, that is, 32 planes. For example, printing on an A4-size print medium requires a capacity as large as 119 Mbits.

Fig. 6B shows the structure of the print buffer of the printing apparatus according to the embodiment. Multi-valued data input to the printing apparatus are directly stored in the print buffer for each color. Since the print buffer is arranged for each color, print buffers are required for six colors, that is, six planes. Even printing on an A4-size print medium requires only a print buffer capacity of about 44.8 Mbits.

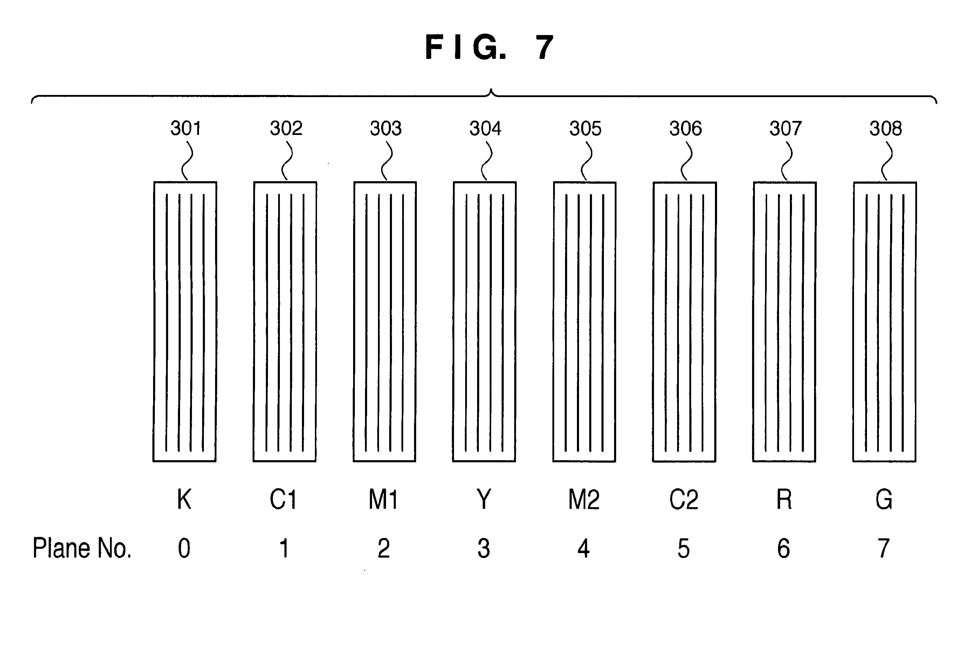

Fig. 7 shows the assignment of a plane to each head chip in the print buffer having the structure of Fig. 6B in the printing apparatus which mounts the print head shown in Fig. 3. Plane No. 0 is assigned to the black (K) ink head chip 301, Plane No. 1 is assigned to the cyan (C1) ink head chip 302, and Plane No. 2 is assigned to the magenta (M1) ink head chip 303. Plane No. 3 is assigned to the yellow (Y) ink head chip 304, Plane No. 4 is assigned to the magenta (M2) ink head chip 305, and Plane No. 5 is assigned to the cyan (C2) ink head chip 306. Plane No. 6 is assigned to the red (R) ink head chip 307, and Plane No. 7 is assigned to the green (G) ink head chip 308. In this case, different plane numbers are assigned to the cyan (C1) ink head chip 302 and cyan (C2) ink head chip 306, but the same print buffer is referred to in order to print based on the same multi-valued data. This also applies to the magenta (M1) ink head chip 303 and magenta (M2) ink head chip 305. This is generalized into a rule that, when the print head has M pairs of nozzle arrays and the memory has N partitions divided in correspondence with N types of inks, multi-valued data are read out from partitions corresponding to the M pairs of nozzle arrays out of the N partitions while permitting overlapping of the M pairs of nozzle arrays.

A data control method using the print data generation circuit 207 in the printing apparatus having the print buffer of this structure will be explained.

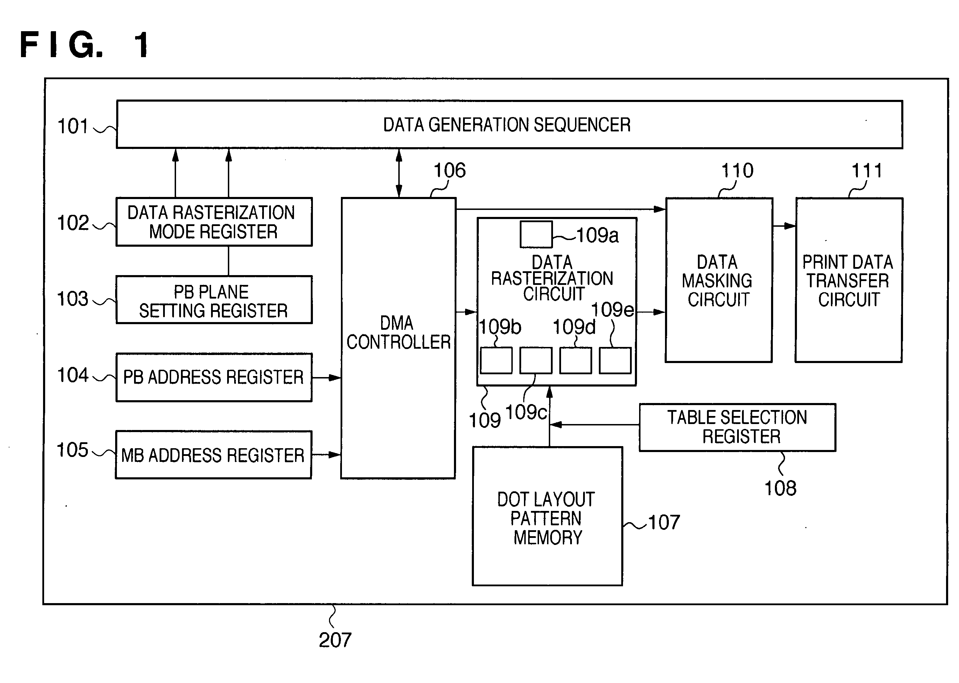

Fig. 1 is a block diagram showing the circuit arrangement of the printing apparatus according to the embodiment. Fig. 1 shows the print data generation circuit 207 in the ASIC 205 in Fig. 2. A data generation sequencer 101 controls generation of print data. The data generation sequencer 101 controls a sequence of reading out data from the print buffer and mask buffer at predetermined timings, performing a print data process such as data masking, and transferring print data to the subsequent head data control circuit 208. The data generation sequencer 101 controls to output a request signal from the print data generation circuit 207 to the head data control circuit 208, and output a response signal from the head data control circuit 208 to the print data generation circuit 207, details of which will be described later. Based on this signal, the print data generation circuit 207 transfers binary data to the head data control circuit 208. A data rasterization mode register 102 sets a data rasterization mode corresponding to each nozzle array. The data rasterization mode register 102 sets either the bitmap mode or multi-valued data rasterization mode. The multi-valued data rasterization mode includes a plurality of rasterization modes depending on the resolution of input data and the number of bits. These rasterization modes are, for example, a 600ppi-2bit mode and 600ppi-4bit mode. A PB plane setting register 103 sets the plane of the print buffer from which data is read out for each nozzle when the multi-valued data rasterization mode is set. Data are generated for nozzle arrays set to the same plane in the PB plane setting register 103. A PB address register 104 sets the read address of the print buffer for each nozzle array. An MB address register 105 sets the read address of the mask buffer for each nozzle array. A DMA controller 106 acquires addresses set in the PB address register 104 and MB address register 105 in response to a trigger from the data generation sequencer 101, and reads out data from a predetermined print buffer and mask buffer. A dot layout pattern memory 107 stores a dot layout pattern used to rasterize input multi-valued data into binary data. The dot layout pattern memory 107 stores a plurality of dot layout pattern tables. The dot layout pattern memory 107 may also be formed from a register. A table selection register 108 selects one of dot layout pattern tables. When data stored in the print buffer are multi-valued data, a data rasterization circuit (data conversion circuit) 109 rasterizes (converts) the multi-valued data into binary data by referring to the dot layout pattern. The dot layout pattern is selected in accordance with the setting of the table selection register 108.

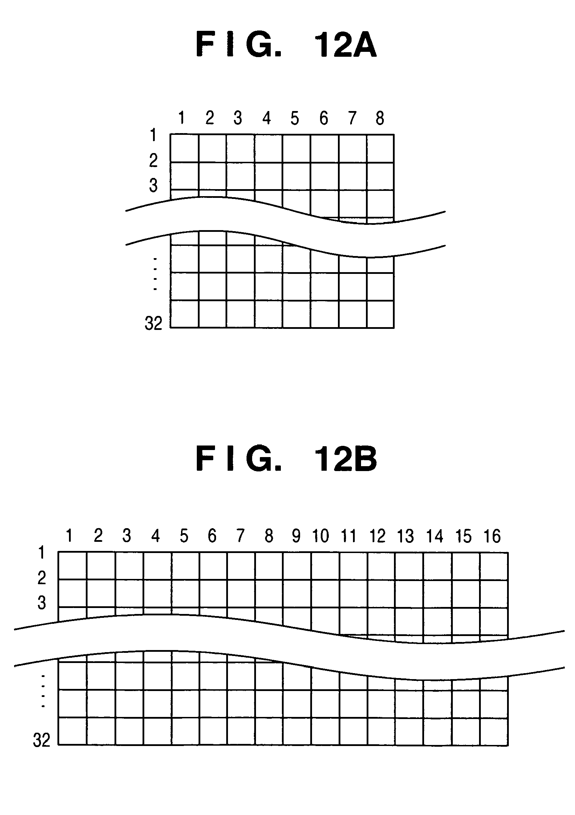

The data rasterization circuit 109 comprises a buffer 109a for holding data read out from the print buffer, and buffers 109b to 109e for holding converted data. As shown in Fig. 12A, the buffer 109a holds 32 successive data in the nozzle array direction x 8 successive data in the print head scanning direction.

The buffers 109b to 109e hold the result of rasterizing data held in the buffer 109a. As shown in Fig. 12B, the buffer 109b has an area for holding 32 successive data in the nozzle array direction x 16 successive data in the print head scanning direction for one nozzle array. The buffers 109c to 109e also have the same structure. In the embodiment, one chip has four nozzle arrays, as shown in Fig. 4, so the buffers 109b to 109e are assigned in correspondence with the respective nozzle arrays.

For example, when data used to print by the head chip 301 is rasterized, the buffer 109b holds data used by the nozzle array 401. The buffer 109c holds data used by the nozzle array 402. The buffer 109d holds data used by the nozzle array 403. The buffer 109e holds data used by the nozzle array 404.

Similarly, when data used to print by the head chip 302 is rasterized, the buffer 109b holds data used by the nozzle array 405. The buffer 109c holds data used by the nozzle array 406. The buffer 109d holds data used by the nozzle array 407. The buffer 109e holds data used by the nozzle array 408.

Note that one group serving as the unit of time-divisional driving includes 32 nozzles, and the buffers 109a and 109b hold data of one group for a plurality of columns.

When data stored in the print buffer are multi-valued data, the multi-valued data rasterization mode is set in the data rasterization mode register. When data stored in the print buffer are bitmap data, data read out from the print buffer are held without rasterizing the data. Note that when data stored in the print buffer are bitmap data, the bitmap mode is set in the data rasterization mode register. A data masking circuit 110 executes a masking process using mask data read out from the mask buffer for binary data rasterized by the data rasterization circuit. A print data transfer circuit 111 transfers print data generated by the data masking circuit to the subsequent head data control circuit 208.

Control of generating print data in the print data generation circuit 207 having the above-described arrangement will be explained. The control will be explained for each data rasterization mode.

To control data generation, an ID is assigned to each nozzle array of the print head shown in Fig. 3. Color ID0 to Color ID31 are assigned sequentially from the nozzle array 401 included in the black ink head chip 301. The nozzle array 401 for discharging middle dots of ink on the even side of the black ink head chip 301 has Color ID0, and the nozzle array 402 for discharging large dots of ink on the even side has Color ID1. The nozzle array 403 for discharging large dots of ink on the odd side has Color ID2, and the nozzle array 404 for discharging middle dots of ink on the odd side has Color ID3. The embodiment defines 32 nozzles x 16 columns as a data generation unit. That is, data corresponding to one group is generated for 16 columns. Each nozzle array includes 384 nozzles. Hence, each nozzle array is divided by 32 nozzles into 12 groups GRP_NO0 to GRP_NO11. Generated data are assigned to the respective groups.

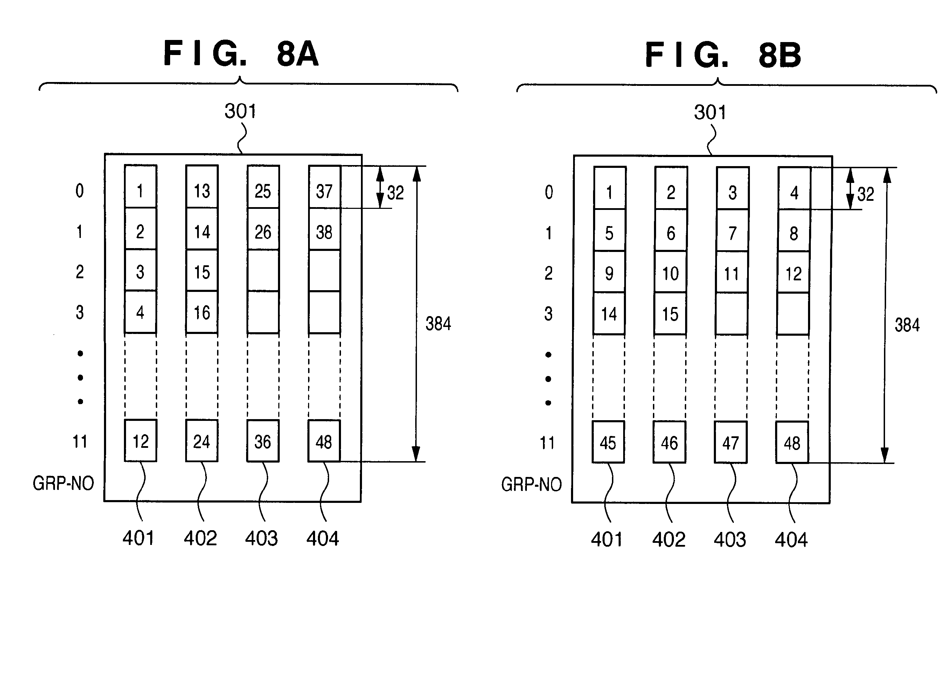

Fig. 8A shows a data generation order when the data rasterization mode is the bitmap mode, that is, the print buffer stores binary data. Since there are 12 groups x 4 nozzle arrays = a total of 48 groups, data are generated in the order of the first to 48th data. Since data are generated for each nozzle array in the bitmap mode, generation of data starts from GRP_NO0 of the nozzle array 401 included in the black ink head chip 301 of Color ID0, and data are sequentially generated up to GRP_NO11. In data generation for one group, data of 16 columns are generated. For example, data of 16 columns are generated for GRP_NO0, and then those of 16 columns are generated for GRP_NO1. Subsequently, data are generated in the same way. After data are generated up to GRP_NO11, data are sequentially generated from GRP_NO0 to GRP_NO11 for Color ID1. Similarly, data are generated up to Color ID31.

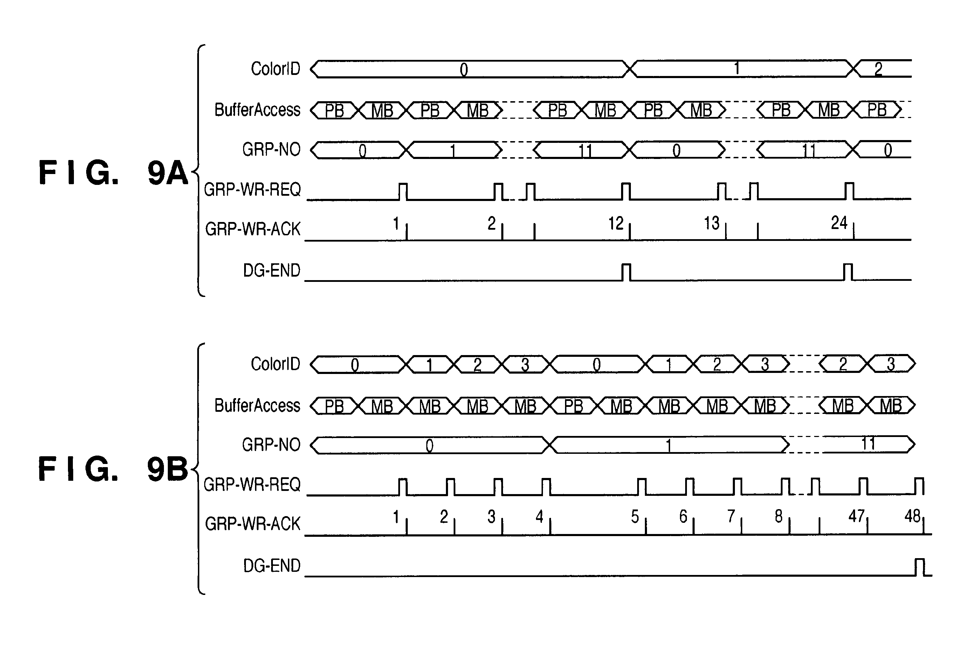

Fig. 9A is a timing chart when the data rasterization mode is the bitmap mode. In order to generate data for GRP_NO0 of Color ID0, data are read from a print buffer address set for Color ID0 in the PB address register 104. Since the data rasterization mode is the bitmap mode, the data rasterization circuit 109 keeps holding print buffer data. Then, mask data are read from a mask buffer address set in the MB address register 105, and the data masking circuit 110 executes a masking process. After that, the print data transfer circuit 111 asserts a request signal GRP_WR_REQ to the subsequent head data control circuit 208 together with Color ID and GRP_NO. Simultaneously when storing print data in an area corresponding to Color ID and GRP_NO, the head data control circuit 208 sends back an acknowledge signal GRP_WR_ACK to the print data generation circuit 207. Upon receiving the acknowledge signal GRP_WR_ACK, the data generation sequencer 101 starts generating data for GRP_NO1. After print data up to GRP_NO11 are similarly transferred to the head data control circuit 208, data generation shifts to Color ID1 in response to a nozzle array data generation end signal DG_END. Then, data are similarly generated up to Color ID31.

Fig. 8B shows a data generation order when the data rasterization mode is the multi-valued data rasterization mode. In the embodiment, the print buffer has one plane for one color, as shown in Fig. 6B, and planes are assigned to respective head chips, as shown in Fig. 7. At this time, Plane No. 0 is set for the nozzle arrays 401 to 404 in the PB plane setting register 103. These four nozzle arrays are defined as one group, and data for the four nozzle arrays are generated at the same time. Since there are 12 groups x 4 nozzle arrays, data are generated in the order of the first to 48th data.

In the multi-valued data rasterization mode, data are generated for each group of nozzle arrays included in the same plane. First, data are generated for GRP_NO0 of the nozzle arrays 401 to 404 included in the black ink head chip 301 of Color ID0. Also in this case, data of 16 columns are generated for each nozzle array. More specifically, data are generated in the order of the nozzle array 401 (Color ID0), nozzle array 402 (Color ID1), nozzle array 403 (Color ID2), and nozzle array 404 (Color ID3). Then, data are generated for GRP_NO1 in the order of the nozzle array 401 (Color ID0), nozzle array 402 (Color ID1), nozzle array 403 (Color ID2), and nozzle array 404 (Color ID3). Subsequently, data are similarly generated in the order of GRP_NO2 to GRP_NO11. Thereafter, data are generated from Plane No. 1 to Plane No. 7.

Fig. 9B is a timing chart when the data rasterization mode is the multi-valued data rasterization mode. In order to generate data for GRP_NO0 of Color ID0, data are read from a print buffer address set for Color ID0 in the PB address register 104. Since the data rasterization mode is the multi-valued data rasterization mode, the data rasterization circuit 109 holds print buffer data as multi-valued data. A dot layout pattern used to rasterize data of Color ID0 is read out from the dot layout pattern memory 107 in accordance with the setting of the table selection register 108. By referring to the dot layout pattern, the multi-valued data held in the data rasterization circuit 109 are rasterized into binary data. In parallel to this, mask data are read from a mask buffer address set for Color ID0 in the MB address register 105, and the data masking circuit 110 executes a masking process for the binary data. Thereafter, the print data transfer circuit 111 asserts the request signal GRP_WR_REQ to the subsequent head data control circuit 208 together with Color ID and GRP_NO. Simultaneously when storing print data in an area corresponding to Color ID and GRP_NO, the head data control circuit 208 sends back the acknowledge signal GRP_WR_ACK to the print data generation circuit 207. Upon receiving the acknowledge signal GRP_WR_ACK, the data generation sequencer 101 starts generating data for the nozzle array 402 set to the same group, that is, for Color ID1. Since the data rasterization circuit 109 holds the input multi-valued data, no data is read out from the print buffer. A dot layout pattern used to rasterize data of Color ID1 is read out from the dot layout pattern memory 107 in accordance with the setting of the table selection register 108. By referring to the dot layout pattern, the multi-valued data held in the data rasterization circuit 109 are rasterized into binary data. In parallel to this, mask data are read out from the mask buffer address set for Color ID1 in the MB address register 105, and the data masking circuit 110 executes a masking process for the binary data. Then, the print data transfer circuit 111 asserts the request signal GRP_WR_REQ to the subsequent head data control circuit 208 together with Color ID and GRP_NO. Subsequently, data for GRP_NO0 of Color ID2 and Color ID3 included in the same plane in the print buffer are sequentially generated. Similarly, print data are generated up to Color ID3 of GRP_NO11, and transferred to the head data control circuit 208. In response to the nozzle array data generation end signal DG_END, data generation shifts to the four nozzle arrays 405 to 408 included in a plane containing the nozzle array of Color ID4. Data are similarly generated up to Plane No. 7 (Color ID31).

The count of access to the print buffer and mask buffer when generating data of four nozzle arrays is 96 in Fig. 9A and 60 in Fig. 9B. From this, the count of access to the print buffer and mask buffer can be decreased from 96 in the bitmap mode to 60 in the multi-valued data rasterization mode.

In the embodiment, the print buffer stores multi-valued data for all nozzle arrays, as shown in Figs. 6B and 7. However, the data rasterization mode and PB plane can be set for each nozzle array. Thus, it is also possible to store bitmap data in the print buffer for only a specific color, for example, each nozzle array of the yellow ink head chip 304. Even in this case, the number of planes of the print buffer can be reduced in comparison with a case of storing bitmap data in the print buffer for the nozzle arrays of all head chips. Apparently, the number of access to the print buffer can decrease.

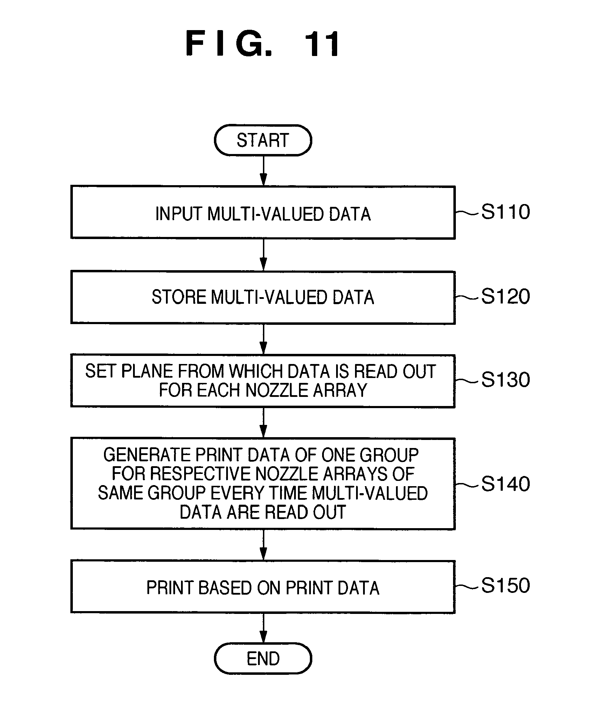

An example of a printing method based on the data readout method according to the embodiment will be explained with reference to the flowchart of Fig. 11.

In step S110, the printing apparatus receives multi-valued data from the host apparatus. In step S120, the printing apparatus stores, in a plurality of planes in the memory, the multi-valued data input from the host apparatus. In step S130, the printing apparatus sets, for each nozzle array, a plane in the memory from which data is read out when generating print data. In step S140, the printing apparatus classifies nozzle arrays set to the same plane as the same group, and divides the nozzles of the respective nozzle arrays into a plurality of groups. Every time multi-valued data are read out from the memory, print data of one group (a plurality of nozzles at almost the same position in the nozzle array direction) is generated for the respective nozzle arrays of the same group. In step S150, the printing apparatus prints based on the print data sequentially generated in step S140.

As described above, according to the embodiment, print data for a plurality of nozzle arrays are generated by one access to the print buffer. This can reduce access to the print buffer and increase the throughput without separately arranging a dedicated memory. Since multi-valued data input from the host apparatus are directly stored in the print buffer, the print buffer capacity can be reduced.

The embodiment has explained the arrangement of a printing apparatus having the multi-valued data rasterization mode and bitmap mode. However, the present invention is also applicable to a printing apparatus having only the multi-valued data rasterization mode.

## Claims

1. A printing apparatus for printing by scanning a print head (211) having a first chip (302) and a second chip (306) for one color, each chip having a first nozzle array (405) of a plurality of nozzles corresponding to a first dot size, a second nozzle array (406) of a plurality of nozzles corresponding to a second dot size different from the first dot size, and a third nozzle array (408) of a plurality of nozzles corresponding to a third dot size different from the first dot size and the second dot size, the nozzle arrays being arranged in parallel to each other and orthogonal to a scanning direction of the head and each nozzle array having a plurality of groups, each group being formed by a plurality of nozzles from each of said nozzle arrays, the apparatus comprising:
a print buffer for each color, each configured to hold multi-valued data of its respective color;
a generation means (207, 208) configured to generate dot data corresponding to the nozzles belonging to the same group of each nozzle array from readout multi-valued data by reading out, for each group, a predetermined number of multi-valued data in a scanning direction of the print head from the print buffer, and configured to rasterize the multi-valued data using dot layout pattern table stored in a dot layout pattern memory (107); and
a transfer means (209) configured to transfer the dot data generated by the generation means to the print head.

2. An apparatus according to claim 1, further comprising a driving means configured to perform time-divisional driving of simultaneously driving a predetermined number of nozzles arranged at a predetermined interval;
wherein at a timing when time-divisional driving is performed, nozzles forming the group are driven at different timings.

3. An apparatus according to claim 1 or claim 2, wherein the generation means (207, 208) comprises a buffer for holding multi-valued data, and is configured to hold data which are successive in a nozzle array direction and successive in the scanning direction of the print head.

4. An apparatus according to any preceding claim, wherein the generation means (207, 208) comprises, for each nozzle array, a buffer for holding dot data corresponding to nozzles included in the nozzle array by a plurality of columns.

5. An apparatus according to claim 1, wherein the generation means (207, 208) is configured to generate, from one multi-valued data, dot data used to print by the first nozzle array (405) and dot data used to print by the second nozzle array (406) and dot data used to print by the third nozzle array (408).

6. A processing method for a printing apparatus which prints by scanning a print head (211) having a first nozzle array (405) of a plurality of nozzles corresponding to a first dot size, a second nozzle array (406) of a plurality of nozzles corresponding to a second dot size different from the first dot size, and a third nozzle array (408) of a plurality of nozzles corresponding to a third dot size different from the first dot size and the second dot size, the nozzle arrays being arranged in parallel to each other and orthogonal to a scanning direction of the head and each nozzle array having a plurality of groups, each group being formed by a plurality of nozzles from each of said nozzle arrays, the method comprising:
storing multi-valued data for each color in a respective print buffer;
generating dot data (S140) corresponding to the nozzles belonging to the same group of each nozzle array from readout multi-valued data by reading out, for each group, a predetermined number of multi-valued data in a scanning direction of the print head from the print buffer, and by rasterizing the multi-valued data using dot layout pattern tables stored in a dot layout pattern memory (107); and
transferring the dot data generated in generating dot data to the print head (211).

## Patentansprüche

1. Druckvorrichtung zum Drucken durch Scannen eines Druckkopfes (211), der für eine Farbe einen ersten Chip (302) und einen zweiten Chip (306) aufweist, wobei jeder Chip eine erste Düsenreihe (405) mit mehreren Düsen aufweist, die einer ersten Fleckgröße entsprechen, eine zweite Düsenreihe (406) mit mehreren Düsen aufweist, die einer zweiten, von der ersten verschiedenen Fleckgröße entsprechen, und eine dritte Düsenreihe (408) mit mehreren Düsen aufweist, die einer dritten, von der ersten und zweiten verschiedenen Fleckgröße entsprechen, wobei die Düsenreihen parallel zueinander sowie senkrecht zu einer Scannrichtung des Kopfes angeordnet sind und jede Düsenreihe mehrere Gruppen aufweist, wobei jede Gruppe durch mehrere Düsen aus jeder der Düsenreihen gebildet wird, wobei die Vorrichtung umfasst:
einen Druckpuffer für jede Farbe, von denen jeder konfiguriert ist, um mehrwertige Daten seiner jeweiligen Farbe zu halten;
eine Erzeugungseinrichtung (207, 208), die konfiguriert ist, um Fleckdaten entsprechend den zur selben Gruppe einer jeden Düsenreihe gehörigen Düsen zu erzeugen aus ausgelesenen mehrwertigen Daten durch Auslesen, und zwar für jede Gruppe, einer vorbestimmten Anzahl mehrwertiger Daten in Scannrichtung des Druckkopfes aus dem Druckpuffer, und die konfiguriert ist, um die mehrwertigen Daten unter Verwendung einer in einem Fleckanordnungsmusterspeicher (107) gespeicherten Fleckanordnungsmustertabelle zu rastern; und
eine Transfereinrichtung (209), die konfiguriert ist, um die von der Erzeugungseinrichtung erzeugten Fleckdaten an den Druckkopf zu transferieren.

2. Vorrichtung nach Anspruch 1, weiterhin umfassend eine Treibereinrichtung, die konfiguriert ist, um Zeitmultiplextreiben zum simultanen Treiben einer vorbestimmten Anzahl an Düsen angeordnet in einem vorbestimmten Intervall durchzuführen;
wobei zu einer Zeit, zu der Zeitmultiplextreiben durchgeführt wird, die die Gruppe bildenden Düsen zu verschiedenen Zeiten getrieben werden.

3. Vorrichtung nach Anspruch 1 oder Anspruch 2, wobei die Erzeugungseinrichtung (207, 208) einen Puffer zum Halten von mehrwertigen Daten umfasst und konfiguriert ist, um Daten zu halten, die in einer Düsenreihenrichtung aufeinanderfolgen und in der Scannrichtung des Druckkopfes aufeinanderfolgen.

4. Vorrichtung nach einem vorhergehenden Anspruch, wobei die Erzeugungseinrichtung (207, 208) für jede Düsenreihe einen Puffer zum Halten von Fleckdaten entsprechend Düsen umfasst, die in der Düsenreihe enthalten sind, durch mehrere Spalten.

5. Vorrichtung nach Anspruch 1, wobei die Erzeugungseinrichtung (207, 208) konfiguriert ist, um aus einer der mehrwertige Daten Fleckdaten zu erzeugen, die von der ersten Düsenreihe (405) zum Drucken verwendet werden, Fleckdaten zu erzeugen, die von der zweiten Düsenreihe (406) zum Drucken verwendet werden und Fleckdaten zu erzeugen, die von der dritten Düsenreihe (408) zum Drucken verwendet werden.

6. Verarbeitungsverfahren für eine Druckvorrichtung, die durch Scannen eines Druckkopfes (211) druckt, der eine erste Düsenreihe (405) mit mehreren Düsen aufweist, die einer ersten Fleckgröße entsprechen, eine zweite Düsenreihe (406) mit mehreren Düsen aufweist, die einer zweiten, von der ersten verschiedenen Fleckgröße entsprechen, und eine dritte Düsenreihe (408) mit mehreren Düsen aufweist, die einer dritten, von der ersten und zweiten verschiedenen Fleckgröße entsprechen, wobei die Düsenreihen parallel zueinander sowie senkrecht zu einer Scannrichtung des Kopfes angeordnet sind und jede Düsenreihe mehrere Gruppen aufweist, wobei jede Gruppe durch mehrere Düsen von jeder der Düsenreihen gebildet wird, wobei das Verfahren umfasst:
Speichern mehrwertiger Daten für jede Farbe in einem je zugehörigen Druckpuffer;
Erzeugen von Fleckdaten (S140) entsprechend den zur selben Gruppe einer jeden Düsenreihe gehörigen Düsen aus ausgelesenen mehrwertigen Daten durch Auslesen, und zwar für jede Gruppe, einer vorbestimmten Anzahl mehrwertiger Daten in Scannrichtung des Druckkopfes aus dem Druckpuffer, und durch Rastern der mehrwertigen Daten unter Verwendung von in einem Fleckanordnungsmusterspeicher (107) gespeicherten Fleckanordnungsmustertabellen; und
Transferieren der durch Fleckdatenerzeugung erzeugten Fleckdaten an den Druckkopf (211).

## Revendications

1. Dispositif d'impression permettant de faire une impression par balayage d'une tête d'impression (211) comprenant une première puce (302) et une deuxième puce (306) pour une seule couleur, chaque puce comprenant un premier réseau (405) de buses d'une pluralité de buses correspondant à une première taille de points, un deuxième réseau (406) de buses d'une pluralité de buses correspondant à une deuxième taille de point différente de la première taille de points, et un troisième réseau (408) de buses d'une pluralité de buses correspondant à une troisième taille de points différente de la première taille de points et de la deuxième taille de points, les réseaux de buses étant agencés parallèlement les uns aux autres et orthogonalement à une direction de balayage de la tête et chaque réseau de buses ayant une pluralité de groupes, chaque groupe étant formé par une pluralité de buses de chacun desdits réseaux de buses, l'appareil comprenant :
une mémoire tampon d'impression pour chaque couleur, chacune configurée pour conserver des données multivaluées de sa couleur respective ;
un moyen de génération (207, 208) configuré pour générer des données de points correspondant aux buses appartenant au même groupe de chaque réseau de buses à partir de données multivaluées de lecture en lisant, pour chaque groupe, un nombre prédéterminé de données multivaluées dans une direction de balayage de la tête d'impression à partir de la mémoire tampon d'impression, et configuré pour rastériser les données multivaluées en utilisant une table de configuration de disposition de points stockée dans une mémoire (107) de configuration de disposition de points ; et
un moyen de transfert (209) configuré pour transférer les données de points générées par le moyen de génération à la tête d'impression.

2. Appareil selon la revendication 1, comprenant en outre un moyen d'entraînement configuré pour effectuer un entraînement par répartition dans le temps qui consiste à entraîner simultanément un nombre prédéterminé de buses agencées à un intervalle prédéterminé ;
dans lequel lorsque l'entraînement par répartition dans le temps est exécuté, des buses formant le groupe sont entraînées à différents moments.

3. Appareil selon la revendication 1 ou la revendication 2, dans lequel le moyen de génération (207, 208) comprend une mémoire tampon destinée à conserver des données multivaluées, et est configurée pour conserver des données qui sont successives dans une direction du réseau de buses et successives dans la direction de balayage de la tête d'impression.

4. Appareil selon l'une des revendications précédentes, dans lequel le moyen de génération (207, 208) comprend, pour chaque réseau de buses, une mémoire tampon destinée à conserver les données de points correspondant à des buses incluses dans le réseau de buses par une pluralité de colonnes.

5. Appareil selon la revendication 1, dans lequel le moyen de génération (207, 208) est configuré pour générer, à partir des données multivaluées, des données de points utilisées pour imprimer par le premier réseau de buses (405) et des données de points utilisées pour imprimer par le deuxième réseau de buses (406) et des données de points utilisées pour imprimer par le troisième réseau de buses (408).

6. Procédé de traitement pour un appareil d'impression qui imprime par balayage d'une tête d'impression (211) comprenant un premier réseau (405) de buses d'une pluralité de buses correspondant à une première taille de points, un deuxième réseau (406) de buses d'une pluralité de buses correspondant à une deuxième taille de points différente de la première taille de points, et un troisième réseau (408) de buses d'une pluralité de buses correspondant à une troisième taille de points différente de la première taille de points et de la deuxième taille de points, les réseaux de buses étant agencés parallèlement les uns aux autres et orthogonalement à une direction de balayage de la tête et chaque réseau de buses comprenant une pluralité de groupes, chaque groupe étant formé par une pluralité de buses de chacun desdits réseaux de buses, le procédé comprenant le fait :
de stocker des données multivaluées pour chaque couleur dans une mémoire tampon d'impression respective ;
de générer, à partir de données multivaluées de lecture, des données (S140) de points, correspondant aux buses appartenant au même groupe que chaque réseau de buse en lisant, pour chaque groupe, un nombre prédéterminé de données multivaluées dans une direction de balayage de la tête d'impression à partir de la mémoire tampon d'impression, et en rastérisant les données multivaluées en utilisant des tables de configuration de disposition de points stockées dans une mémoire (107) de motifs de disposition de points ; et
de transférer les données de points générées dans la génération des données de points à la tête d'impression (211).
